# EUROPEAN PATENT APPLICATION

(11) **EP 4 618 310 A1**
(43) Date of publication of application: **17.09.2025**
(21) Application number: 23908972.5
(22) Date of filing: 23.05.2023
(51) Int. Cl.: H01Q 1/12, H04M 1/02, H01Q 1/52

(54) **ELECTRONIC DEVICE**

(30) Priority: 28.12.2022 CN 202223518422 U
(71) Applicant: Honor Device Co., Ltd., Shenzhen, Guangdong 518040 (CN)
(72) Inventor: WU, Dong, Shenzhen, Guangdong 518040 (CN); YIN, Ming, Shenzhen, Guangdong 518040 (CN); ZHU, Kaixiang, Shenzhen, Guangdong 518040 (CN); SHI, Longfei, Shenzhen, Guangdong 518040 (CN); LIANG, Feng, Shenzhen, Guangdong 518040 (CN)
(74) Representative: Gill Jennings & Every LLP
(86) International application number: PCT/CN2023/095801
(87) International publication number: WO 2024/139024

(57) **Abstract**

This application discloses an electronic device, including a first metal plate, a second metal plate, and a first circuit board. The first metal plate is configured to support a display screen of the electronic device. The second metal plate and the first metal plate are oppositely arranged in a first direction, and the second metal plate is configured to support a rear cover of the electronic device. At least a portion of the first circuit board is located between the first metal plate and the second metal plate. The first metal plate includes a first opening, and the second metal plate includes a second opening. A projection of the first opening on the second metal plate at least partially overlaps the second opening. In addition, the first opening is at least partially located in a projection region of the first circuit board on the first metal plate, and the second opening is at least partially located in a projection region of the first circuit board on the second metal plate. The electronic device according to this application can weaken coupling between a parallel plate waveguide and a microstrip line waveguide, solve a problem of noise interference to an antenna, and have a simple structure and a wide application range.

## Description

This application claims priority to Chinese Patent Application No. 202223518422.7, filed with the China National Intellectual Property Administration on December 28, 2022 and entitled "ELECTRONIC DEVICE", which is incorporated herein by reference in its entirety.

### TECHNICAL FIELD

This application relates to the field of communication technologies, and in particular, to an electronic device.

### BACKGROUND

In an existing electronic device, a circuit board is usually used to connect a display screen to a mainboard, so that the display screen can display information such as an image and a video. Currently, frequencies of various signals of a mobile industry processor interface (Mobile Industry Processor Interface, MIPI) and the like on a display screen of an electronic device become increasingly high. Consequently, components such as a circuit board and a connector thereof generate a large quantity of common-mode noise signals, and these common-mode noise signals may be coupled to an antenna, thereby affecting receiving performance of the antenna.

### SUMMARY

To solve the foregoing problems, this application provides an electronic device, which provides an opening to form an open circuit structure on a parallel plate waveguide. This can effectively reduce coupling between the parallel plate waveguide and a microstrip line waveguide, thereby solving a problem of interference of a noise signal to an antenna.

According to a fifth aspect, this application provides an electronic device. The electronic device includes a first metal plate, a second metal plate, and a first circuit board. The first metal plate is configured to support a display screen of the electronic device. The second metal plate and the first metal plate are oppositely arranged in a first direction, and the second metal plate is configured to support a rear cover of the electronic device. At least a portion of the first circuit board is located between the first metal plate and the second metal plate. The first metal plate includes a first opening, and the second metal plate includes a second opening. A projection of the first opening on the second metal plate at least partially overlaps the second opening. In addition, the first opening is at least partially located in a projection region of the first circuit board on the first metal plate, and the second opening is at least partially located in a projection region of the first circuit board on the second metal plate.

It can be understood that the electronic device according to this application may be, but is not limited to, any electronic device with a wireless communication function such as a mobile phone, a tablet computer, or a notebook computer. This is not specifically limited in this application.

According to an implementation of this application, the first metal plate and the second metal plate may jointly form a parallel plate waveguide. A circuit on at least a portion of the first circuit board and the first metal plate and/or the second metal plate may jointly form a microstrip line waveguide. For example, a circuit on at least a portion of the first circuit board and the first metal plate jointly form a first microstrip line waveguide; and the circuit on the at least a portion of the first circuit board and the second metal plate jointly form a second microstrip line waveguide.

The first opening is provided in the first metal plate, and the second opening is provided in the second metal plate, so that an open circuit structure can be formed on the parallel plate waveguide. This increases input impedance of the parallel plate waveguide and effectively weakens coupling between the parallel plate waveguide and the microstrip line waveguide.

In addition, compared with that a conductive foam, a conductive elastic piece, and a wave-absorbing material are often used to solve the noise interference problem in the prior art, in this application, the noise interference problem can be solved by providing the first opening in the first metal plate and providing the second opening in the second metal plate, with no need to additionally use any electrical connection auxiliary material. This reduces costs of electrical connection auxiliary materials, and has a simple structure, a high space utilization rate and a wide application range.

In a possible implementation of the first aspect, the first circuit board is a flexible printed circuit, and the first circuit board extends from a side of the second metal plate that faces away from the first metal plate to between the first metal plate and the second metal plate through the second opening.

In a possible implementation of the first aspect, the projection of the first opening on the second metal plate covers the second opening. The first opening and the second opening jointly form the open circuit structure on the parallel plate waveguide. This effectively weakens coupling between the parallel plate waveguide and the first microstrip line waveguide.

In a possible implementation of the first aspect, the electronic device further includes an antenna, where in a second direction, the first metal plate, the second metal plate, and the first circuit board are located on a same side of the antenna, and the second direction is perpendicular to the first direction. The first opening is located at an end of the first metal plate close to the antenna, and the second opening is located at an end of the second metal plate close to the antenna.

In a possible implementation of the first aspect, the second metal plate further includes a third opening, and in the second direction, the third opening is farther away from the antenna than the second opening; and In addition, the third opening is at least partially located in a projection region of the first circuit board on the second metal plate.

The third opening can form an open circuit structure on the parallel plate waveguide, so that the input impedance of the parallel plate waveguide becomes larger. Therefore, an electromagnetic wave reflected from an end of the parallel plate waveguide away from the antenna cannot continue to propagate, thereby weakening coupling between the parallel plate waveguide and the second microstrip line waveguide.

In a possible implementation of the first aspect, the first circuit board includes a first extension section and a second extension section that are connected to each other, the first extension section is located at an end of the first circuit board away from the antenna and is grounded, and a projection of the third opening on the first circuit board at least partially overlaps the second extension section. This further weakens the coupling between the parallel plate waveguide and the second microstrip line waveguide.

In a possible implementation of the first aspect, the second metal plate includes a solid portion surrounding the third opening, and a projection of the solid portion on the first circuit board at least partially overlaps the first extension section. This prevents the third opening from being too large, to ensure that the second metal plate has a certain structural strength.

In a possible implementation of the first aspect, a shape of the first opening or the second opening is one of the following: a circle, a rectangle, and an ellipse.

In a possible implementation of the first aspect, the first circuit board is configured to connect a mainboard of the electronic device to the display screen of the electronic device.

In a first possible implementation of the first aspect, the antenna includes a GPS antenna or a WI-FI antenna.

According to a second aspect, this application provides an electronic device. The electronic device includes a first metal plate, a second metal plate, a first circuit board, and an antenna. The first metal plate is configured to support a display screen of the electronic device. The second metal plate is configured to support a rear cover of the electronic device, where the first metal plate and the second metal plate are oppositely arranged in a first direction. At least a portion of the first circuit board is located between the first metal plate and the second metal plate. In a second direction, the first metal plate, the second metal plate, and the first circuit board are located on a same side of the antenna, and the second direction is perpendicular to the first direction. The second metal plate includes a third opening, and in the second direction, the third opening is located at an end of the second metal plate away from the antenna. In addition, the third opening is at least partially located in a projection region of the first circuit board on the second metal plate.

The third opening can form the open circuit structure on the parallel plate waveguide, thereby implementing efficient decoupling between the parallel plate waveguide and the microstrip line waveguide, and effectively improving an anti-interference ability of the electronic device.

### BRIEF DESCRIPTION OF DRAWINGS

FIG. 1 is a diagram of an example structure of a parallel plate waveguide according to some embodiments of this application;
FIG. 2 is a diagram of an example structure of a microstrip line waveguide according to some embodiments of this application;
FIG. 3 are schematic diagrams of a structure of a mobile phone according to an embodiment of this application, where FIG. 3(a) is a three-dimensional view of the mobile phone, and FIG. 3(b) is an exploded view of the mobile phone;
FIG. 4 is a schematic diagram of connection between a mainboard and a display screen according to some embodiments;
FIG. 5A is a sectional view of a mobile phone according to an embodiment of this application;
FIG. 5B is a top view of a mobile phone according to an embodiment of this application;
FIG. 6(a) is a diagram of electric field distribution of a first circuit board in a mobile phone according to an embodiment of this application;
FIG. 6(b) is a diagram of electric field distribution of a first circuit board in some technical solutions, where the first metal plate is provided with no first opening;
FIG. 7 are schematic layout diagrams of a first opening and a second opening according to some other embodiments of this application, where FIG. 7(a) is a top view of a mobile phone, and FIG. 7(b) is a sectional view of the mobile phone;
FIG. 8 is a diagram of electric field distribution of a first circuit board according to FIG. 7;
FIG. 9(a) is a schematic layout diagram of a first opening and a second opening in some other technical solutions;
FIG. 9(b) is a diagram of electric field distribution of a first circuit board according to FIG. 9(a);
FIG. 10(a) is a schematic layout diagram of a first opening and a second opening in some other technical solutions;
FIG. 10(b) is a diagram of electric field distribution of a first circuit board according to FIG. 10(a);
FIG. 11(a) is a schematic layout diagram of a first opening 11 and a second opening 21 in some other technical solutions; FIG. 11(b) is a diagram of electric field distribution of a first circuit board 60 according to FIG. 11(a);
FIG. 12 are schematic diagrams of a structure of a mobile phone with a third opening according to some embodiments of this application, where FIG. 12(a) is a sectional view of the mobile phone, and FIG. 12(b) is a top view of the mobile phone;
FIG. 13(a) is a diagram of electric field distribution of a first circuit board according to FIG. 11;
FIG. 13(b) is a diagram of electric field distribution of a first circuit board provided with no third opening in some technical solutions;
FIG. 14 is a schematic diagram of a structure of a mobile phone including a first opening, a second opening, and a third opening according to some embodiments of this application; and
FIG. 15 is a schematic diagram of a structure of a mobile phone including a third opening according to some other embodiments of this application.

Description of reference signs: 1 - Mobile phone; 10 - First metal plate; 11 - First opening; 100 - Parallel plate waveguide; 20 - Second metal plate; 21 - Second opening; 21a - Opening; 22 - Third opening; 200 - Microstrip line waveguide; 210 - First microstrip line waveguide; 220 - Second microstrip line waveguide; 30 - Mainboard; 40 - Display screen; 50 - Rear cover; 60 - First circuit board; 70 - Antenna.

### DESCRIPTION OF EMBODIMENTS

The implementations of this application are described below by specific embodiments, and a person skilled in the art can easily understand other advantages and effects of this application from content disclosed in this specification. Although the descriptions of this application are provided with reference to some embodiments, it does not mean that the features of this application are limited to the implementations. On the contrary, the purpose of describing this application with reference to the implementations is to cover other options or modifications that may be extended based on the claims of this application. To provide an in-depth understanding of this application, the following description contains many specific details. This application may be practiced without these details. In addition, to avoid confusing or blurring emphasis of this application, some specific details are omitted in the description. It should be noted that, embodiments of this application and features in the embodiments may be mutually combined in a case that no conflict occurs.

It should be noted that in this specification, similar reference signs and letters indicate similar items in the following accompanying drawings. Therefore, once an item is defined in one accompanying drawing, the item does not need to be further defined and explained in the subsequent accompanying drawings.

In the descriptions of this application, it should be noted that, an orientation or positional relationship indicated by the term "central", "upper", "lower", "left", "right", "vertical", "horizontal", "inner", "outer" or the like is based on the orientation or positional relationship shown in the accompanying drawings, which is only for convenience of describing this application and simplifying the description, rather than indicating or implying that the referred apparatus or element needs to have a particular orientation, be constructed and operated in a particular orientation, and therefore should not be construed as limiting this application. Moreover, the terms "first" and "second" are merely used for the illustrative purpose, and should not be construed as indicating or implying relative importance.

In the descriptions of this application, it should be noted that, unless otherwise explicitly specified and defined, the terms such as "mounting", "connecting", and "connection" should be understood in a broad sense. For example, they may be a fixed connection, a detachable connection, or an integrated connection; may be a mechanical connection or an electrical connection; and may be a direct connection, an indirect connection by an intermediate medium, or internal communication between two elements. For a person of ordinary skill in the art, the specific meanings of the terms mentioned above in this application can be construed according to specific circumstances.

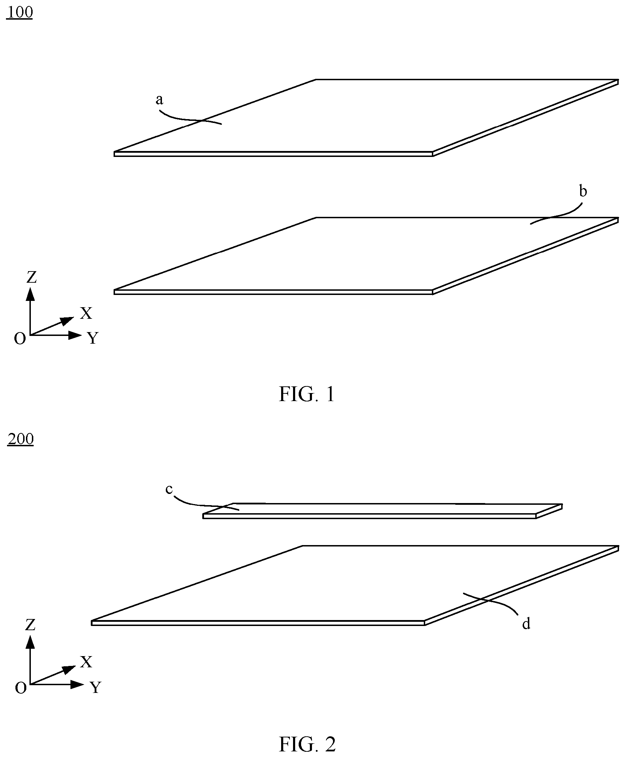

To facilitate understanding technical solutions of this application, some concepts or terms involved in this application are first explained.
(1) Waveguide: A structure for restricting or guiding directional transmission of an electromagnetic wave.
(2) Parallel plate waveguide: The parallel plate waveguide is composed of two oppositely arranged conductor plate. FIG. 1 is a diagram of an example structure of a parallel plate waveguide 100 according to some embodiments of this application. As shown in FIG. 1, in a Z-axis direction, a metal plate a and a metal plate b are oppositely arranged, and a medium (for example, air) is filled between the metal plate a and the metal plate b. The metal plate a and the metal plate b jointly form the parallel plate waveguide 100, and an electromagnetic wave (not shown) can propagate in the parallel plate waveguide 100.
(3) Microstrip line waveguide: FIG. 2 is a diagram of an example structure of a microstrip line waveguide 200 according to some embodiments of this application. As shown in FIG. 2, a strip-shaped conductor c and a metal plate d are oppositely arranged in a Z-axis direction, thereby jointly forming the microstrip line waveguide 200. For example, the strip-shaped conductor c may be a circuit on a flexible printed circuit (Flexible Printed Circuit, FPC).

Implementations of this application are further described in detail below with reference to the accompanying drawings.

An implementation of this application provides an electronic device. The electronic device according to this application has a simple structure, and can effectively solve a noise interference problem.

It can be understood that the electronic device according to this application may be, but is not limited to, any electronic device with a wireless communication function such as a mobile phone, a tablet computer, or a notebook computer. This is not specifically limited in this application. The following describes the solution by using an example in which the electronic device is a mobile phone.

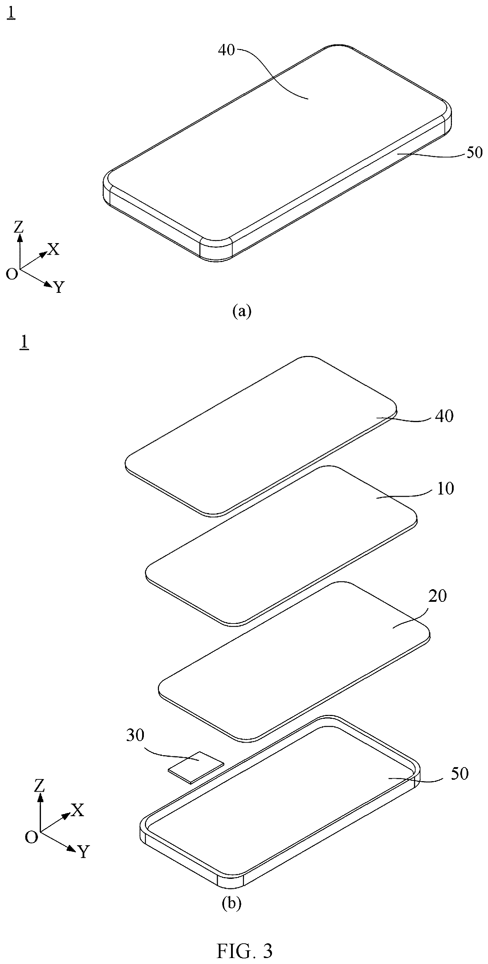

FIG. 3 are schematic diagrams of a structure of a mobile phone 1 according to an embodiment of this application, where FIG. 3(a) is a three-dimensional view of the mobile phone 1, and FIG. 3(b) is an exploded view of the mobile phone 1. To facilitate subsequent description, before a specific structure of the mobile phone 1 is described, a Z direction (as a first direction), an X direction (as a second direction), and a Y direction are first defined with reference to FIG. 3 in this application. As shown in FIG. 3, the X direction is a length direction of the mobile phone 1; the Y direction is a width direction of the mobile phone 1; and the Z direction is a thickness direction of the mobile phone 1. The X direction, the Y direction, and the Z direction are perpendicular to each other for example description below.

Referring to FIG. 3, the mobile phone 1 includes a first metal plate 10, a second metal plate 20, a mainboard 30, a display screen 40, and a rear cover 50. The display screen 40, the first metal plate 10, the second metal plate 20, the mainboard 30, and the rear cover 50 are sequentially arranged in a negative direction of a Z-xis. When a user holds the mobile phone 1, the display screen 40 of the mobile phone 1 faces the user, and the rear cover 50 of the mobile phone 1 faces away from the user.

The first metal plate 10 can support and protect the display screen 40. The second metal plate 20 can support and protect the rear cover 50, thereby further enhancing a structural strength of the mobile phone 1. For example, the first metal plate 10 and the second metal plate 20 each may be made of a metal material such as iron and an aluminum alloy. A plurality of electronic components (for example, chips, central processing units, and power supplies) (not shown) may be arranged on the mainboard 30. The mainboard 30 is arranged on a surface of the second metal plate 20 that faces away from the first metal plate 10, to reduce noise interference of the electronic components on the mainboard 30 to the display screen 40. The mainboard 30 is electrically connected to the display screen 40 and can transmit a data signal to the display screen 40, and the display screen 40 can display information such as an image and a video based on different data signals.

An example manner of connection between the mainboard 30 and the display screen 40 is described below with reference to the accompanying drawings.

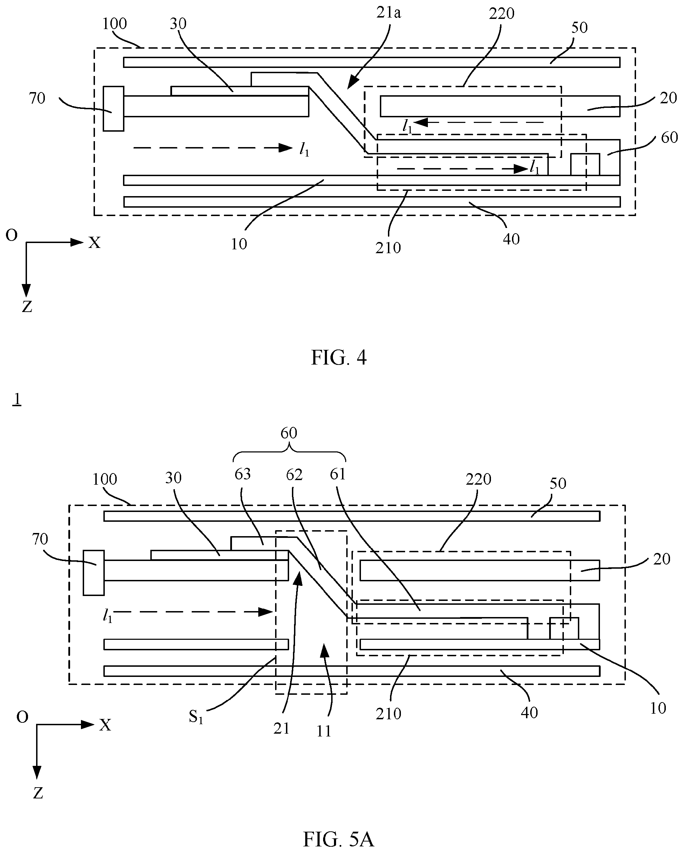

FIG. 4 is a schematic diagram of connection between the mainboard 30 and the display screen 40 according to some embodiments. As shown in FIG. 4, the mainboard 30 is connected to the display screen 40 by a first circuit board 60. Specifically, an opening 21a is provided in the second metal plate 20. The first circuit board 60 extends from a side of the second metal plate 20 that faces away from the first metal plate 10 to between the first metal plate 10 and the second metal plate 20 through the opening 21a. In addition, one end of the first circuit board 60 is connected to the mainboard 30, and the other end thereof is connected to the display screen 40. Based on this, the mainboard 30 can transmit various data signals to the display screen 40 through the first circuit board 60.

In addition, the mobile phone 1 further includes an antenna 70. The antenna 70 may be arranged at an edge of the second metal plate 20. The antenna 70 is configured to implement wireless communication between the mobile phone 1 and a network device (for example, a server or a base station) or another electronic device.

It can be understood that the first metal plate 10 and the second metal plate 20 can jointly form a parallel plate waveguide 100. Referring to FIG. 4, an electromagnetic wave *l*₁ radiated by the antenna 70 can propagate in a positive direction of an X-axis in the parallel plate waveguide 100. A circuit on a portion of the first circuit board 60 that is located between the first metal plate 10 and the second metal plate 20 can form a first microstrip line waveguide 210 together with the first metal plate 10. Referring to FIG. 4, the electromagnetic wave *l*₁ propagates in the positive direction of the X-axis in the first microstrip line waveguide 210. Similarly, the circuit on the portion of the first circuit board 60 that is located between the first metal plate 10 and the second metal plate 20 can also form a second microstrip line waveguide 220 together with the second metal plate 20. Referring to FIG. 4, the electromagnetic wave *l*₁ always propagates in the positive direction of the X-axis in the parallel plate waveguide 100 until the electromagnetic wave reaches an edge of the parallel plate waveguide 100. Since the parallel plate waveguide 100 forms an open circuit at the edge thereof, the electromagnetic wave *l*₁ cannot continue to propagate in the positive direction of the X-axis, and the electromagnetic wave *l*₁ is reflected back and continues to propagate in a negative direction of the X-axis in the second microstrip line waveguide 220.

The parallel plate waveguide 100 is inevitably subjected to coupling with the first microstrip line waveguide 210 and the second microstrip line waveguide 220. That is, a large number of common-mode noise signals generated by the first circuit board 60 and a connector (for example, a board-to-board connector) are coupled with the antenna 70. This interferes with the antenna 70, reduces receiving sensitivity of the antenna 70, and finally affects over-the-air performance (over the air performance, OTA) of the antenna of the mobile phone 1.

To solve the above problems, the openings are provided in the first metal plate and the second metal plate in the embodiment of this application, to form an open circuit structure on the parallel plate waveguide. This solves the problem of interference of the noise signals to the antenna and can effectively weaken coupling between the parallel plate waveguide and the microstrip line waveguide. The technical solutions of this application are described below with reference to the accompanying drawings.

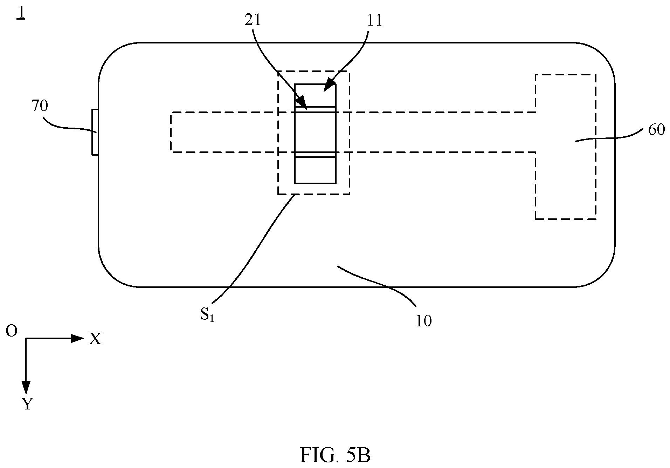

FIG. 5A is a sectional view of a mobile phone 1 according to an embodiment of this application. FIG. 5B is a top view of the mobile phone 1 according to an embodiment of this application. As shown in FIG. 5A and FIG. 5B, the mobile phone 1 includes a first metal plate 10, a second metal plate 20, a mainboard 30, a display screen 40, a rear cover 50, a first circuit board 60, and an antenna 70. The display screen 40, the first metal plate 10, the second metal plate 20, and the rear cover 50 are sequentially arranged in a negative direction of a Z-xis.

A first opening 11 is provided in the first metal plate 10. The first opening 11 runs through the first metal plate 10 in a Z-axis direction. The first metal plate 10 and the second metal plate 20 can jointly form a parallel plate waveguide 100. A second opening 21 is provided in the second metal plate 20. The second opening 21 runs through the second metal plate 20 in the Z-axis direction. A projection of the first opening 11 on the second metal plate 20 at least partially overlaps the second opening 21. In this way, the first opening 11 and the second opening 21 may jointly form an open circuit structure A of the parallel plate waveguide 100. For example, as shown in FIG. 5A and FIG. 5B, the projection of the first opening 11 on the second metal plate 20 covers the second opening 21.

At least a portion of the first circuit board 60 is located between the first metal plate 10 and the second metal plate 20, and a circuit on the least a part can form a microstrip line waveguide together with the first metal plate 10 and/or the second metal plate 20.

For example, the first circuit board 60 is a flexible printed circuit. The first circuit board 60 extends from a side of the second metal plate 20 that faces away from the first metal plate 10 to between the first metal plate 10 and the second metal plate 20 through the second opening 21. Specifically, the first circuit board 60 includes a first portion 61, a second portion 62, and a third portion 63 that are sequentially connected in an X-axis direction. The first portion 61 is located between the first metal plate 10 and the second metal plate 20 and is connected to the display screen 40. A circuit on the first portion 61 and the first metal plate 10 jointly form a first microstrip line waveguide 210. The circuit on the first portion 61 and the second metal plate 20 jointly form a second microstrip line waveguide 220. The second portion 62 passes through the second opening 21. The third portion 63 is located on a surface of the second metal plate 20 that faces away from the first metal plate 10. That is, the third portion 63 and the mainboard 30 are located on a same side of the second metal plate 20, and the third portion 63 is connected to the mainboard 30.

The first opening 11, the second opening 21, and the first circuit board 60 are aligned with each other in the Z-axis direction. That is, the first opening 11 is at least partially located in a projection region of the first circuit board 60 on the first metal plate 10, and the second opening 21 is at least partially located in a projection region of the first circuit board 60 on the second metal plate 20. In the example shown in FIG. 5A and FIG. 5B, the first opening 11 and the second opening 21 each are aligned with the second portion 62 of the first circuit board 60 in the Z-axis direction; and in another embodiment, the first opening 11 and the second opening 21 each may alternatively be aligned with the first portion 61 of the first circuit board 60 in the Z-axis direction.

The antenna 70 is arranged at an edge of the second metal plate 20. That is, in the X-axis direction, the first metal plate 10, the second metal plate 20, the mainboard 30, and the first circuit board 60 are all located on a same side of the antenna 70. For example, the first opening 11 is provided at an end of the first metal plate 10 close to the antenna 70. The second opening 21 is also provided at an end of the second metal plate 20 close to the antenna 70.

The electromagnetic wave *l*₁ radiated by the antenna 70 can propagate through the parallel plate waveguide 100. It can be understood that the arrangement of the position of the antenna 70 is only for example explanation. In another embodiment, the antenna 70 may be arranged at another position. For example, the antenna 70 may alternatively be arranged outside the mobile phone 1. This is not limited in this application, and any position of the antenna 70 that can cause the electromagnetic wave *l*₁ of the antenna 70 to propagate in the parallel plate waveguide is within the protection scope of this application.

In the mobile phone 1, the first opening 11 is provided in the first metal plate 10, and the second opening 21 is provided in the second metal plate 20, to form the open circuit structure A at a position S₁ of the parallel plate waveguide 100, so that input impedance of the parallel plate waveguide 100 is increased, and the electromagnetic wave *l*₁ cannot continue to propagate in the positive direction of the X-axis at the position S1 of the parallel plate waveguide 100. This implements efficient decoupling between the parallel plate waveguide 100 and the first microstrip line waveguide 210, thereby solving the problem of interference of noise signals to the antenna 70.

To facilitate the understanding of a decoupling effect between the parallel plate waveguide 100 and the first microstrip line waveguide 210, the following description is based on a corresponding electric field distribution diagram.

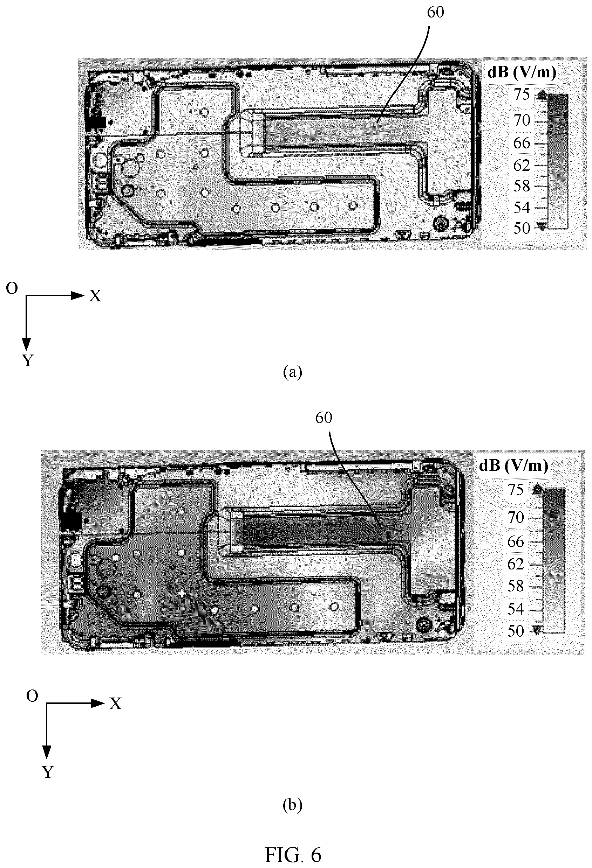

FIG. 6(a) is a diagram of electric field distribution of a first circuit board 60 in a mobile phone 1 according to an embodiment of this application. FIG. 6(b) is a diagram of electric field distribution of a first circuit board 60 in some technical solutions, where the first metal plate 10 is provided with no first opening 11. Referring to FIG. 6(b), when the first metal plate 10 is provided with no first opening 11, an electric field strength of the first circuit board 60 can reach a maximum of 72 dB (V/m). Referring to FIG. 6(a), the first opening 11 is provided in the first metal plate 10, and the maximum electric field intensity of the first circuit board 60 of the mobile phone 1 is 62 dB (V/m), which is 10 dB (V/m) lower than that in a solution that no opening is provided in the first metal plate 10. This implements efficient decoupling between the parallel plate waveguide 100 and the first microstrip line waveguide 210, and greatly improves an anti-interference ability of the mobile phone 1.

It can be understood that the layout scheme of the first opening 11 and the second opening 21 is only for example explanation. As long as the projection of the first opening 11 on the second metal plate 20 at least partially overlaps the second opening 21, the coupling between the parallel plate waveguide 100 and the first microstrip line waveguide 210 can be effectively weakened, thereby improving the anti-interference ability of the mobile phone 1.

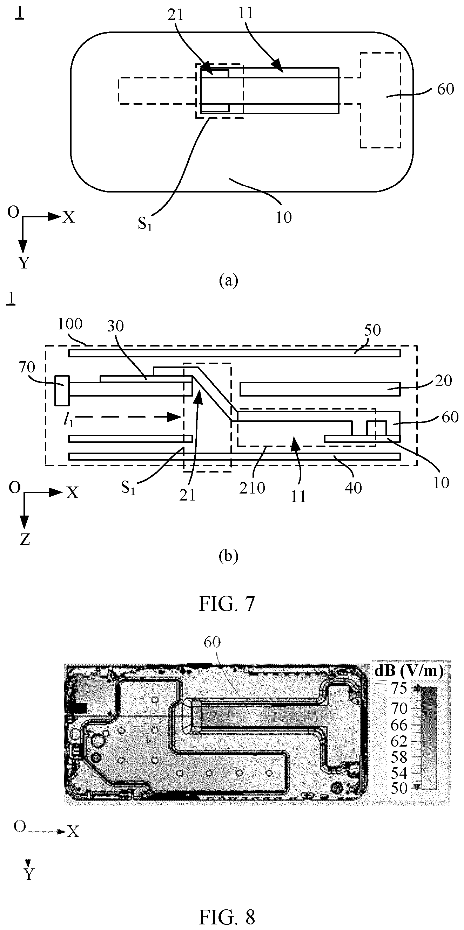

For example, FIG. 7 are schematic layout diagrams of a first opening 11 and a second opening 21 according to some other embodiments of this application, where FIG. 7(a) is a top view of a mobile phone 1, and FIG. 7(b) is a sectional view of the mobile phone 1, FIG. 8 is a diagram of electric field distribution of a first circuit board 60 according to FIG. 7. As shown in FIG. 7, in a Z-axis direction, a projection of the first opening 11 is larger than a projection of the second opening 21, and the projection of the first opening 11 covers the projection of the second opening 21. In this case, the first opening 11 and the second opening 21 can also jointly form an open circuit structure A at the position S1 of the parallel plate waveguide 100. This effectively weakens coupling between the parallel plate waveguide 100 and the first microstrip line waveguide 210. In comparison between FIG. 6(b) and FIG. 8, the electric field intensity of the first circuit board 60 is also reduced by 10 dB (V/m) compared with a scheme that no opening is provided in the first metal plate 10, and the anti-interference ability of the mobile phone 1 is enhanced.

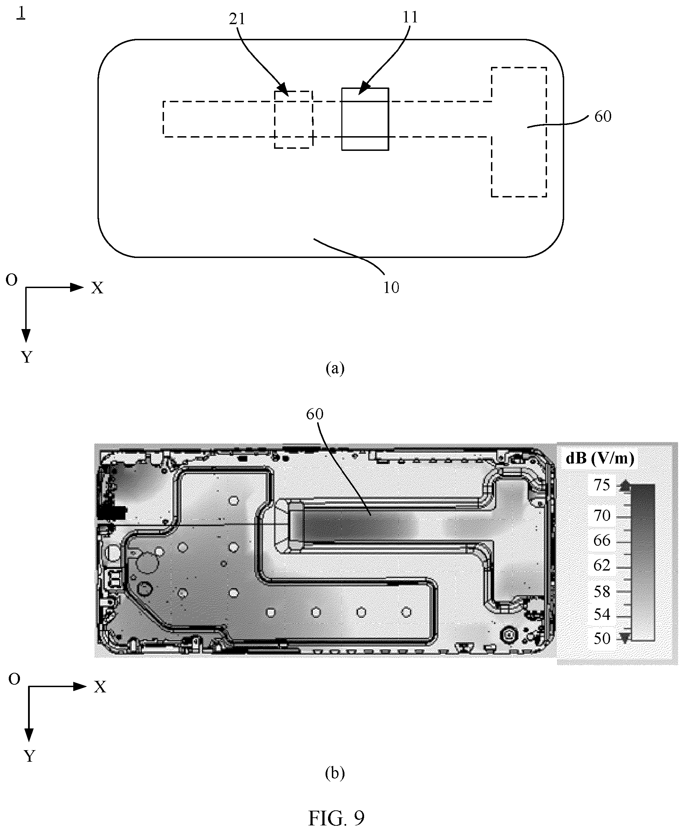

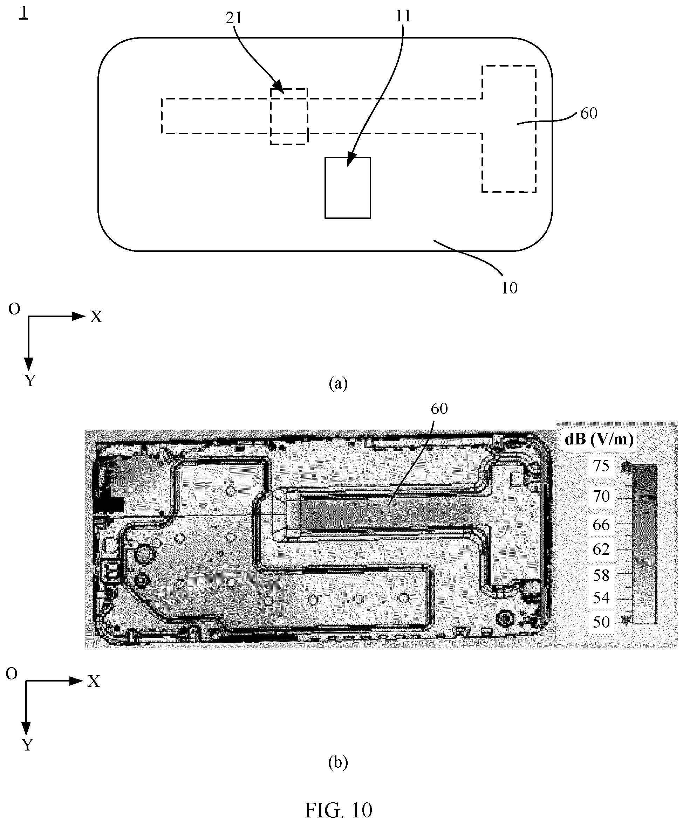

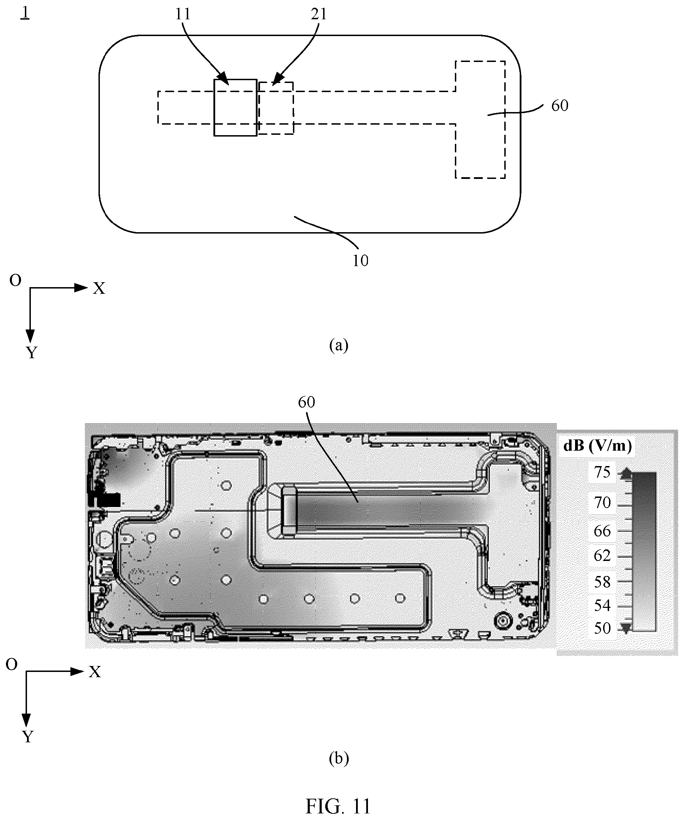

FIG. 9(a) is a schematic layout diagram of a first opening 11 and a second opening 21 in some other technical solutions. FIG. 9(b) is a diagram of electric field distribution of a first circuit board 60 according to FIG. 9(a). FIG. 10(a) is a schematic layout diagram of a first opening 11 and a second opening 21 in some other technical solutions. FIG. 10(b) is a diagram of electric field distribution of a first circuit board 60 according to FIG. 10(a). FIG. 11(a) is a schematic layout diagram of a first opening 11 and a second opening 21 in some other technical solutions; FIG. 11(b) is a diagram of electric field distribution of a first circuit board 60 according to FIG. 11(a). As shown in FIG. 9 to FIG. 11, a projection of the first opening 11 on the second metal plate 20 does not overlap with the second opening 21 (shown in a rectangular region surrounded by dashed lines in FIG. 9 to FIG. FIG. 11). Correspondingly, the electric field intensity of the first circuit board 60 is as high as 75 dB (V/m), which cannot effectively meet an anti-interference requirement. Compared with the above technical solution, in the layout scheme of the first opening 11 and the second opening 21 in this application (as shown in FIG. 5A, and FIG. 5B and FIG. 7, for example), the maximum electric field intensity of the first circuit board 60 is 62 dB (V/m), and the electric field intensity is greatly reduced, so that the mobile phone 1 have a higher anti-interference ability.

In addition, compared with that a conductive foam, a conductive elastic piece, and a wave-absorbing material are often used to solve the noise interference problem in the prior art, in this application, the noise interference problem can be solved by providing the first opening 11 in the first metal plate 10 and providing the second opening 21 in the second metal plate 20, with no need to additionally use any electrical connection auxiliary material. This reduces costs of electrical connection auxiliary materials, and has a simple structure, a high space utilization rate and a wide application range.

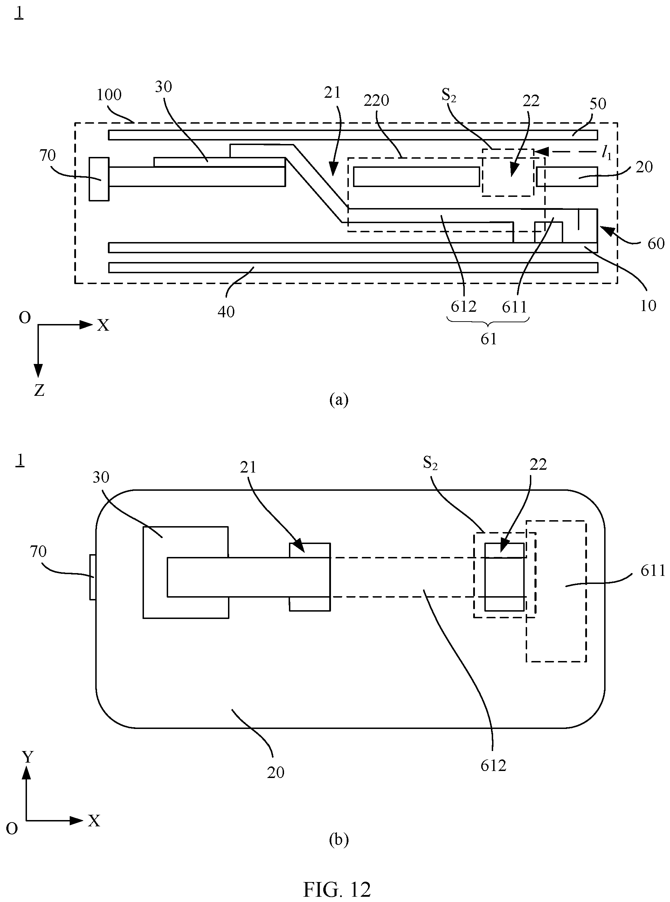

To further improve the anti-interference ability of the mobile phone 1, in some embodiments of this application, the second metal plate 20 may be further provided with a third opening. FIG. 12 are schematic diagrams of a structure of a mobile phone 1 with a third opening 22 according to some embodiments of this application, where FIG. 12(a) is a sectional view of the mobile phone 1, and FIG. 12(b) is a top view of the mobile phone 1. As shown in FIG. 12, a second opening 21 and the third opening 22 are provided in the second metal plate 20 of the mobile phone 1. In an X-axis direction, the third opening 22 is farther away from the antenna 70 than the second opening 21. In addition, the third opening 22 and the first circuit board 60 are aligned in a Z-axis direction. That is, the third opening 22 is at least partially located in a projection region of the first circuit board 60 on the second metal plate 20. For example, as shown in FIG. 11, the third opening 22 is aligned with the first portion 61 of the first circuit board 60 in the Z-axis direction.

The third opening 22 can form an open circuit structure B at a position S₂ on the parallel plate waveguide 100, so that the input impedance of the parallel plate waveguide 100 becomes larger. Therefore, an electromagnetic wave *l*₁ reflected from an end of the parallel plate waveguide 100 away from the antenna 70 cannot continue to propagate in the negative direction of the X-axis, thereby weakening coupling between the parallel plate waveguide 100 and the second microstrip line waveguide 220.

To facilitate detailed description of a layout scheme of the third opening 22, a specific structure of the first portion 61 of the first circuit board 60 is first described. Referring to FIG. 12, the first portion 61 of the first circuit board 60 includes a first extension section 611 and a second extension section 612 that are connected to each other in an X-axis direction. In the X-axis direction, the first extension section 611 is farther away from the antenna 70 than the second extension section 612, and the first extension section 611 is grounded. For example, in a Y-axis direction, a dimension of the first extension section 611 is larger than that of the second extension section 612. That is, the first portion 61 of the first circuit board 60 is tapered in the negative direction of the X-axis.

The third opening 22 is at least partially located in a projection region of the first portion 61 of the first circuit board 60 on the second metal plate 20. In this embodiment, the projection of the third opening 22 on the first circuit board 60 covers a region of the second extension section 612 close to the first extension section 611. It can also be understood that the projection of the third opening 22 on the first circuit board 60 covers a tapered region of the first circuit board 60, to form an open circuit structure B at the position S2 on the parallel plate waveguide 100, thereby implementing efficient decoupling between the parallel plate waveguide 100 and the second microstrip line waveguide 220. In addition, a projection of a plate surface of the second metal plate 20 around the third opening 22 on the first circuit board 60 at least partially overlaps the first extension section 611. That is, in the X-axis direction, a certain distance is reserved between the third opening 22 and an end of the second metal plate 20 away from the antenna 70, and the third opening 22 is not too large, thereby ensuring that the second metal plate 20 has a certain structural strength. In another embodiment, the projection of the third opening 22 on the first circuit board 60 may further cover the first extension section 611.

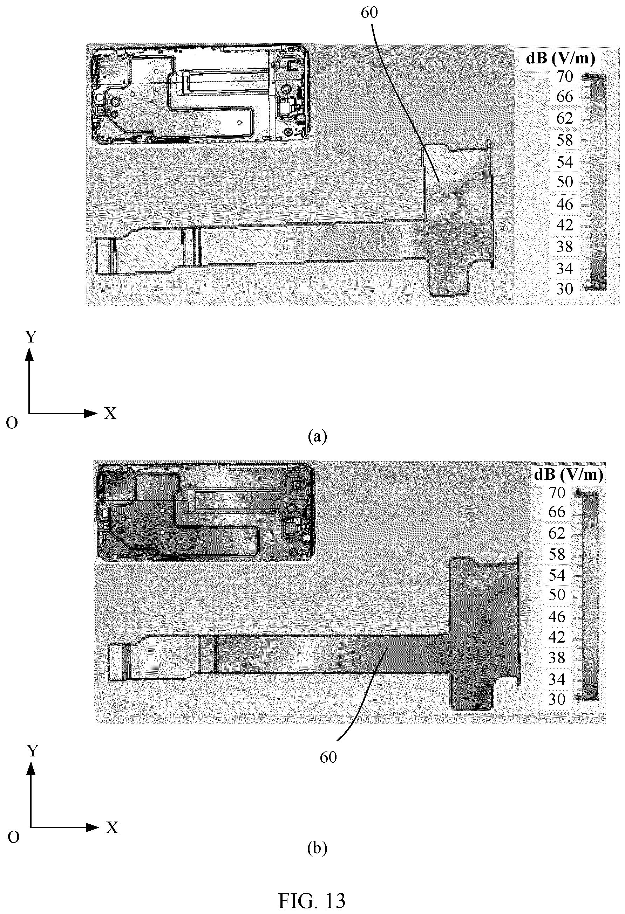

FIG. 13(a) is a diagram of electric field distribution of a first circuit board 60 according to FIG. 11. FIG. 13(b) is a diagram of electric field distribution of a first circuit board 60 provided with no third opening 22 in some technical solutions. Referring to FIG. 13(a) and FIG. 13(b), compared with existing technical solutions, in this application, the third opening 22 is provided in the second metal plate 20, so that the electric field strength of the first circuit board 60 is reduced by 12 dB (V/m), thereby implementing efficient decoupling between the parallel plate waveguide 100 and the second microstrip line waveguide 220, and further enhancing the anti-interference ability of the mobile phone 1.

It should be noted that, the above embodiments only take the mobile phone 1 including the second opening 21 and the third opening 22 as example description, and other modifications can be made by a person skilled in the art. For another, in another embodiment, the mobile phone 1 may alternatively include a first opening 11, a second opening 21, and a third opening 22. FIG. 13(a) and FIG. 13(b) is a schematic diagram of a structure of a mobile phone 1 including a first opening 11, a second opening 21, and a third opening 22 according to some embodiments of this application. As shown in FIG. 13(a) and FIG. 13(b), the first opening 11 is provided in the first metal plate 10, and the second opening 21 and the third opening 22 are provided in the second metal plate 20. The first opening 11 is located at an end of the first metal plate 10 close to the antenna 70, and a projection of the first opening 11 on the second metal plate 20 covers the second opening 21. In an X-axis direction, the second opening 21 is closer to the antenna 70 than the third opening 22.

The first opening 11 and the second opening 21 jointly form an open circuit structure A at the position S₁ on the parallel plate waveguide 100. This effectively weakens coupling between the parallel plate waveguide 100 and the first microstrip line 210 waveguide. The third opening 22 forms an open circuit structure B at the position S₂ on the parallel plate waveguide 100, thereby weakening coupling between the parallel plate waveguide 100 and the second microstrip line waveguide 220. Based on this, the mobile phone 1 can implement efficient decoupling between the parallel waveguide 100 and the first microstrip line waveguide 210 and the second microstrip line waveguide 220. This effectively improves an anti-interference effect, and is suitable for decoupling in any frequency band without a defect of narrow-band decoupling.

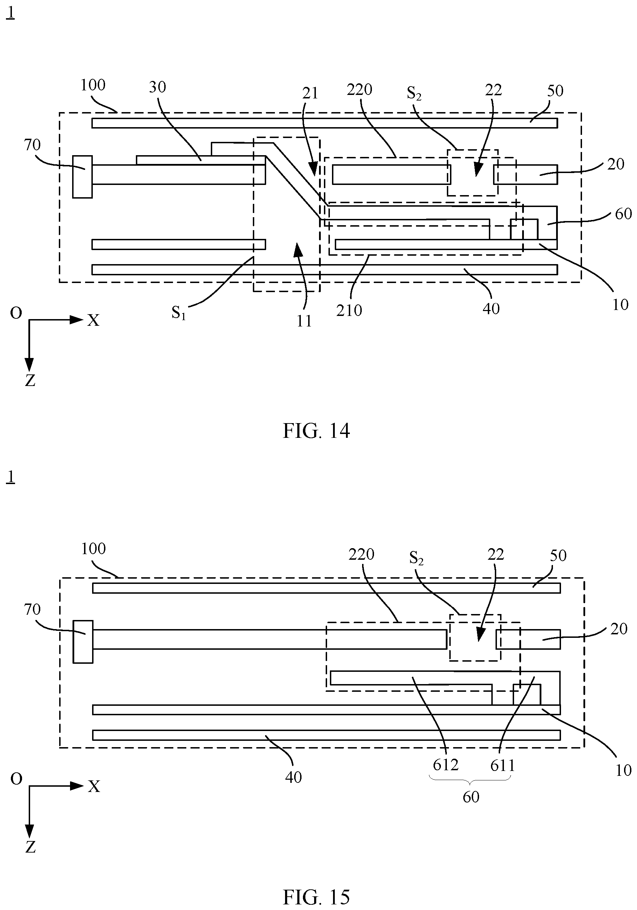

For another example, in some other embodiments, the mobile phone 1 may alternatively include only an open circuit structure B formed by a third opening 22, but not include an open circuit structure A formed by a first opening 11 and a second opening 21. FIG. 15 is a schematic diagram of a structure of a mobile phone 1 including a third opening 22 according to some other embodiments of this application. As shown in FIG. 15, the first circuit board 60 is located between the first metal plate 10 and the second metal plate 20. Alternatively, in another alternative implementation, the first circuit board 60 may be partially located between the first metal plate 10 and the second metal plate 20. The first circuit board 60 may be used for other purposes. For example, the first circuit board 60 is configured to connect another signal line (not shown) to transmit a data signal. A third opening 22 is provided in the second metal plate 20. In an X-axis direction, the third opening 22 is located at an end of the second metal plate 20 away from the antenna 70. In addition, the third opening 22 is at least partially located in a projection region of the first circuit board 60 on the second metal plate 20. For example, the projection of the third opening 22 on the first circuit board 60 covers a region of the second extension section 612 close to the first extension section 611, thereby forming an open circuit structure B at the position S₂ on the parallel plate waveguide 100, implementing efficient decoupling between the parallel plate waveguide 100 and the second microstrip line waveguide 220, and effectively improving the anti-interference ability of the mobile phone 1.

In some embodiments of this application, a shape of each of the first opening 11, the second opening 21, and the third opening 22 may be a circle, a rectangle, or an ellipse. It can be understood that any shape of the first opening 11, the second opening 21, and the third opening 22 that can achieve the above anti-interference effect is within the protection scope of this application. This is not specifically limited in this application.

In some embodiments of this application, the antenna 70 may be any one or more of a global positioning system (global positioning system, GPS) antenna, a wireless fidelity (Wireless Fidelity, WI-FI) antenna, or a low-frequency antenna.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Embodiments of this application and features in embodiments may be mutually combined in a case that no conflict occurs. Therefore, the protection scope of this application shall be subject to the protection scope of the claims.

## Claims

1. An electronic device, comprising:
a first metal plate, configured to support a display screen of the electronic device;
a second metal plate, configured to support a rear cover of the electronic device, wherein the first metal plate and the second metal plate are oppositely arranged in a first direction,
wherein the first metal plate comprises a first opening, the second metal plate comprises a second opening, and a projection of the first opening on the second metal plate at least partially overlaps the second opening; and
a first circuit board, wherein the first circuit board extends from a side of the second metal plate that faces away from the first metal plate to between the first metal plate and the second metal plate through the second opening.

2. The electronic device according to claim 1, wherein the first opening is at least partially located in a projection region of the first circuit board on the first metal plate, and the second opening is at least partially located in a projection region of the first circuit board on the second metal plate.

3. The electronic device according to claim 1, wherein the projection of the first opening on the second metal plate covers the second opening.

4. The electronic device according to claim 1, further comprising an antenna, wherein in a second direction, the first metal plate, the second metal plate, and the first circuit board are located on a same side of the antenna, and the second direction is perpendicular to the first direction, wherein the first opening is located at an end of the first metal plate close to the antenna, and the second opening is located at an end of the second metal plate close to the antenna.

5. The electronic device according to claim 4, wherein the second metal plate further comprises a third opening, and in the second direction, the third opening is farther away from the antenna than the second opening; and the third opening is at least partially located in a projection region of the first circuit board on the second metal plate.

6. The electronic device according to claim 5, wherein the first circuit board comprises a first extension section and a second extension section that are connected to each other, the first extension section is located at an end of the first circuit board away from the antenna and is grounded, and a projection of the third opening on the first circuit board at least partially overlaps the second extension section.

7. The electronic device according to claim 6, wherein the second metal plate comprises a solid portion surrounding the third opening, and a projection of the solid portion on the first circuit board at least partially overlaps the first extension section.

8. The electronic device according to claim 1, wherein a shape of the first opening or the second opening is one of the following: a circle, a rectangle, and an ellipse.

9. The electronic device according to claim 1, wherein the first circuit board is configured to connect a mainboard of the electronic device to the display screen of the electronic device.

10. The electronic device according to claim 4, wherein the antenna comprises a GPS antenna or a WI-FI antenna.

11. An electronic device, comprising:
a first metal plate, configured to support a display screen of the electronic device;
a second metal plate, configured to support a rear cover of the electronic device, wherein the first metal plate and the second metal plate are oppositely arranged in a first direction,
a first circuit board, wherein at least a portion of the first circuit board is located between the first metal plate and the second metal plate; and
an antenna, wherein in a second direction, the first metal plate, the second metal plate, and the first circuit board are located on a same side of the antenna, and the second direction is perpendicular to the first direction,
wherein the second metal plate comprises a third opening, and in the second direction, the third opening is located at an end of the second metal plate away from the antenna; and the third opening is at least partially located in a projection region of the first circuit board on the second metal plate.
